# EUROPÄISCHE PATENTSCHRIFT

(11) **EP 2 699 785 B1**
(45) Veröffentlichungstag und Bekanntmachung des Hinweises auf die Patenterteilung: **27.03.2019**
(21) Anmeldenummer: 12716397.0
(22) Anmeldetag: 19.04.2012
(51) Int. Cl.: F02M 25/00, F28D 21/00, F28D 7/16

(54) **ABGASKÜHLER ZUM KÜHLEN VON VERBRENNUNGSABGAS EINER VERBRENNUNGSKRAFTMASCHINE, ABGASKÜHLSYSTEM UND VERFAHREN ZUM HERSTELLEN EINES ABGASKÜHLSYSTEMS**
EXHAUST GAS COOLER FOR COOLING COMBUSTION EXHAUST GAS OF AN INTERNAL COMBUSTION ENGINE, EXHAUST GAS COOLING SYSTEM AND METHOD FOR MANUFACTURING AN EXHAUST GAS COOLING SYSTEM
REFROIDISSEUR DE GAZ D'ÉCHAPPEMENT POUR REFROIDIR LES GAZ D'ÉCHAPPEMENT DE COMBUSTION D'UN MOTEUR À COMBUSTION INTERNE, SYSTÈME DE REFROIDISSEMENT DE GAZ D'ÉCHAPPEMENT ET PROCÉDÉ DE PRODUCTION D'UN SYSTÈME DE REFROIDISSEMENT DE GAZ D'ÉCHAPPEMENT

(30) Priorität: 20.04.2011 DE 102011007748
(43) Veröffentlichungstag der Anmeldung: 26.02.2014
(73) Patentinhaber: MAHLE Behr GmbH & Co. KG, 70469 Stuttgart (DE)
(72) Erfinder: BUCHER, Wolfgang, 70180 Stuttgart (DE); GRILL, Oliver, 71159 Mötzingen (DE)
(74) Vertreter: Grauel, Andreas
(86) Internationale Anmeldenummer: PCT/EP2012/057196
(87) Internationale Veröffentlichungsnummer: WO 2012/143462

(56) Entgegenhaltungen:
- EP-A1- 1 367 253
- EP-A2- 0 930 429
- JP-A- 2000 266 494
- US-A1- 2009 250 201
- US-A1- 2010 044 019

## Beschreibung

Die vorliegende Erfindung bezieht sich auf einen Abgaskühler zum Kühlen von Verbrennungsabgas einer Verbrennungskraftmaschine mit einem Kühlmittel, auf einen Wassersammeladapter zum Ableiten von Kühlmittel aus dem Abgaskühler, auf ein Abgaskühlsystem für eine mehrzylindrige Verbrennungskraftmaschine und auf ein Verfahren zum Herstellen eines Abgaskühlsystems.

Bei einem herkömmlichen Abgaskühler für eine Abgasrückführung in den Ansaugtrakt einer Verbrennungskraftmaschine wird heißes Verbrennungsabgas aus der Verbrennungskraftmaschine zu einem Abgaskühler geleitet, um dort von Umgebungsluft gekühlt zu werden. Um das Verbrennungsabgas zu kühlen kann auch ein Kühlmittel verwendet werden.

Dokument JP 2000 266494 zeigt einen Abgaskühler gemäß dem Oberbegriff von Anspruch 1.

Die EP 0 930 429 B1 zeigt eine Vorrichtung zur Kühlung rückgeführten Abgases einer flüssigkeitsgekühlten Brennkraftmaschine.

Es ist die Aufgabe der vorliegenden Erfindung einen verbesserten Abgaskühler zum Kühlen von Verbrennungsabgas einer Verbrennungskraftmaschine, einen verbesserten Wassersammeladapter zum Ableiten von Kühlmittel aus dem Abgaskühler, ein verbessertes Abgaskühlsystem für eine mehrzylindrige Verbrennungskraftmaschine sowie ein verbessertes Verfahren zum Herstellen eines Abgaskühlsystems zu schaffen.

Diese Aufgabe wird durch einen Abgaskühler zum Kühlen von Verbrennungsabgas einer Verbrennungskraftmaschine mit einem Kühlmittel, einen Wassersammeladapter zum Ableiten von Kühlmittel aus dem Abgaskühler sowie ein Abgaskühlsystem für eine mehrzylindrige Verbrennungskraftmaschine gemäß den Hauptansprüchen gelöst.

Für eine verbesserte Bauraumnutzung bei Verbrennungsmotoren werden bisher peripher angeordnete Komponenten näher an einen zentralen Motorblock angeordnet. Um zusätzlich kurze Zu- und Ableitungswege zu den Komponenten zu ermöglichen werden die Komponenten, wie Ladeluftkühler oder Abgaskühler, teilweise direkt mit dem Motorblock verschraubt. Dadurch ergibt sich ein verbessertes Ansprechverhalten bei Lastwechseln, da eine geringere Luftmasse oder Gasmasse beschleunigt oder abgebremst werden muss. Direkt an den Motorblock geschraubte Kühler können unmittelbar aus dem Motorblock mit Kühlmittel versorgt werden. Jedoch ist es dann erforderlich für verschiedene Motoren verschiedene Kühler zu entwickeln und zu bevorraten, da bei den verschiedenen Motoren eine Anzahl und eine Lage von Schnittstellen zum Kühler variiert.

Der vorliegenden Erfindung liegt die Erkenntnis zugrunde, dass Entwicklungskosten, Werkzeugkosten und Produktionskosten gespart werden können, wenn bei unterschiedlichen Motorvarianten mit unterschiedlichen Zylinderzahlen ein einheitlicher Kühler verwendet werden kann. Dazu kann ein modularer Abgaswärmetauscher eine Mindestanzahl von Schnittstellen in einem Bauteil aufweisen, die bei allen betreffenden Varianten der Verbrennungskraftmaschine gleich sind. Varianten der betreffenden Verbrennungskraftmaschine mit einer größeren Anzahl an Schnittstellen können über einen Adapter angeschlossen werden, der direkt mit dem Abgaswärmetauscher verbunden ist. Dazu weisen der

Abgaswärmetauscher und der Adapter eine gemeinsame Schnittstelle zum Verbinden auf.

Vorteilhafterweise kann mit mehreren Varianten des Adapters und dem einheitlichen Abgaswärmetauscher eine Vielzahl von Motorvarianten angeschlossen werden, wobei die Varianten des Adapters besonders kostengünstig bereitgestellt werden können.

Die vorliegende Erfindung schafft einen Abgaskühler zum Kühlen von Verbrennungsabgas einer Verbrennungskraftmaschine mit einem Kühlmittel, wobei der Abgaskühler die Merkmale von Anspruch 1 aufweist.
einen Abgaseintritt zum Einleiten von heißem Verbrennungsabgas in den Abgaskühler;
einen Abgasaustritt zum Ausleiten von gekühltem Verbrennungsabgas aus dem Abgaskühler, wobei der Abgasaustritt fluidisch mit dem Abgaseintritt verbunden ist;
zumindest einen Kühlmitteleintritt zum fluidischen Verbinden des Abgaskühlers mit zumindest einem Kühlmittelauslass der Verbrennungskraftmaschine; und eine Schnittstelle zum fluidischen Anbinden eines Wassersammeladapters, wobei die Schnittstelle dazu ausgebildet ist, das Kühlmittel aus dem Abgaskühler abzuführen.

Unter einem Abgaskühler kann ein Wärmeübertrager verstanden werden, der dazu ausgebildet ist, Verbrennungsabgas mit Kühlmittel zu kühlen. Dazu kann der Abgaskühler beispielsweise ein Rohrbündel zum Führen des Verbrennungsabgases von dem Abgaseintritt zum Abgasaustritt aufweisen. Das Rohrbündel kann auch das Kühlmittel führen. Das Kühlmittel kann beispielsweise Kühlwasser sein. Ein Kühlmitteleintritt kann ein Stutzen sein, der dazu ausgebildet ist, das Kühlmittel von der Verbrennungskraftmaschine in den Abgaskühler zu leiten. Ein Kühlmittelauslass kann eine Schnittstelle an der Verbrennungskraftmaschine sein, die dazu ausgebildet ist, eine direkte Verbindung zu einem Kühlmittelkanal und im Betrieb zu einem Kühlmittelstrom in der Verbrennungskraftmaschine herzustellen. Unter einer Schnittstelle kann eine Übergabestelle für das Kühlmittel von dem Abgaskühler zu einem Wassersammeladapter verstanden werden. Die Schnittstelle ist entsprechend einer Schnittstelle des Wassersammeladapters ausgebildet. Ebenso kann die Schnittstelle gegengleich der Schnittstelle des Wassersammeladapters ausgebildet sein. Die Schnittstelle kann auch so ausgerichtet sein, wie die Schnittstelle des Wassersammeladapters. Der Abgaskühler kann ein kastenförmiges Gehäuse aufweisen, bei dem der Abgaseintritt an einer ersten Stirnwand angeordnet ist, und der Abgasaustritt an einer dem Abgaseintritt gegenüberliegenden Stirnwand angeordnet ist.

Der zumindest eine Kühlmitteleintritt kann quer zu einer Strömungsrichtung des Verbrennungsabgases im Abgaskühler aus dem Abgaskühler herausragen und eine Befestigungseinrichtung zum Befestigen des Abgaskühlers an der Verbrennungskraftmaschine aufweisen. Unter einer Befestigungseinrichtung kann beispielsweise zumindest eine Befestigungsbohrung, eine Dichtfläche und/oder eine Führungsfläche verstanden werden. Damit kann der Abgaskühler direkt an der Verbrennungskraftmaschine befestigt werden und ohne Haltevorrichtung montiert werden.

Ferner kann der zumindest eine Kühlmitteleintritt abgewinkelt sein. Der Kühlmitteleintritt kann eine Krümmung aufweisen, die es ermöglicht, den Abgaskühler nahe an der Verbrennungskraftmaschine zu befestigen. Damit kann wertvoller Bauraum eingespart werden und eine Zugänglichkeit für eine Montage des Abgaskühlers kann gewährleistet werden.

Ferner kann die Schnittstelle zum Anbinden des Wassersammeladapters auf der Seite des Abgaskühlers aus dem Abgaskühler herausragen, auf welcher der zumindest eine Kühlmitteleintritt angeordnet ist. Dabei kann die Schnittstelle dazu ausgebildet sein, das Kühlmittel in einer Strömungsrichtung des Verbrennungsabgases aus dem Abgaskühler abzuführen. Dadurch kann der Wassersammeladapter direkt an dem weiteren Wasseraustritt befestigt werden, ohne durch enge Kurvenradien einen Fluidwiderstand zu erhöhen.

Der Abgaskühler kann einen zweiten Kühlmitteleintritt zum fluidischen Verbinden des Abgaskühlers mit einem zweiten Kühlmittelauslass der Verbrennungskraftmaschine und einen dritten Kühlmitteleintritt zum fluidischen Verbinden des Abgaskühlers mit einem dritten Kühlmittelauslass der Verbrennungskraftmaschine aufweisen. Durch eine Ausführungsform mit drei Kühlmitteleintritten kann eine möglichst breite Motorenpalette abgedeckt werden. Beispielsweise können bei einem Sechszylinder-Motor in V-Anordnung zwei identische Abgaskühler verwendet werden. Für einen Vierzylinder-Motor in Reihenanordnung kann ein Wassersammeladapter mit einem zusätzlichen Kühlmitteleintritt verwendet werden. Für einen Sechszylinder-Motor in Reihenanordnung kann ein Wassersammeladapter mit drei zusätzlichen Kühlmitteleintritten verwendet werden.

Ferner kann der Abgaskühler am Abgaseintritt einen Flansch zum Befestigen einer Abgaszuführeinrichtung und am Abgasaustritt einen Flansch zum Befestigen einer Abgasabführeinrichtung aufweisen. Durch eine Flanschverbindung kann der Abgaskühler einfach gewartet werden.

Weiterhin gibt es einen Wassersammeladapter zum Ableiten von Kühlmittel aus einem Abgaskühler gemäß einer Ausführungsform der Erfindung, wobei der Wassersammeladapter die folgenden Merkmale aufweist:
eine Schnittstelle zum fluidischen Verbinden des Wassersammeladapters mit der Schnittstelle des Abgaskühlers;
zumindest einen Kühlmitteleintritt zum fluidischen Verbinden mit zumindest einem weiteren Kühlmittelauslass der Verbrennungskraftmaschine; und
einen Kühlmittelaustritt.

Unter einer Schnittstelle kann eine Übergabestelle für das Kühlmittel von dem Abgaskühler zu dem Wassersammeladapter verstanden werden. Beispielsweise kann die Schnittstelle gleich ausgerichtet und/oder ausgebildet sein, wie die Schnittstelle des Abgaskühlers. Ein Kühlmitteleintritt kann ein Stutzen sein, der dazu ausgebildet ist, das Kühlmittel von der Verbrennungskraftmaschine in den Wassersammeladapter zu leiten. Durch den Kühlmitteleintritt kann der Wassersammeladapter Kühlmittel aus Teilen der Verbrennungskraftmaschine ableiten, die nicht an den Abgaskühler angeschlossen sind. Damit kann eine gleichmäßige Kühlung der ganzen Verbrennungskraftmaschine erreicht werden.

Ferner kann der zumindest eine Kühlmitteleintritt eine Befestigungseinrichtung zum Befestigen des Wassersammeladapters an der Verbrennungskraftmaschine aufweisen. Unter einer Befestigungseinrichtung kann beispielsweise zumindest eine Befestigungsbohrung, eine Dichtfläche und/oder eine Führungsfläche verstanden werden. Damit kann der Wassersammeladapter direkt an der Verbrennungskraftmaschine befestigt werden und ohne Haltevorrichtung montiert werden.

Weiterhin schafft die vorliegende Erfindung ein Abgaskühlsystem für eine mehrzylindrige Verbrennungskraftmaschine, wobei das Abgaskühlsystem die Merkmale von Anspruch 7 aufweist.

Das Abgaskühlsystem kann ein Dichtelement zum fluiddichten Verbinden der Schnittstelle des Abgaskühlers mit der Schnittstelle des Wassersammeladapters aufweisen. Dabei kann das Dichtelement zwischen der Schnittstelle des Abgaskühlers und der Schnittstelle des Wassersammeladapters angeordnet sein. Das Dichtelement kann dazu ausgebildet sein, radiale und axiale Bewegungen des Abgaskühlers relativ zum Wassersammeladapter auszugleichen. Dadurch können Schwingungen und thermischer Verzug ausgeglichen werden, ohne eine Dichtheit der Verbindung zu beeinträchtigen. Ebenso kann der Wassersammeladapter stoffschlüssig mit dem Abgaskühler verbunden werden.

Weiterhin schafft die vorliegende Erfindung ein Verfahren zum Herstellen eines Abgaskühlsystems gemäß Anspruch 9.

Bei der Anzahl von Kühlmittelauslässen an der Verbrennungskraftmaschine kann es sich um einer in einer Reihe angeordneten Kühlmittelauslässen handeln. Durch die Auswahl eines passenden Wassersammeladapters zu einem einheitlichen Abgaskühler können unterschiedliche Motorvarianten mit unterschiedlichen Anzahlen von Kühlmittelauslässen mit einer geringen Anzahl an unterschiedlichen Teilen für das Abgaskühlsystem bestückt werden. Dadurch sinken Werkzeugkosten, da die unterschiedlichen Wassersammeladapter einfach herzustellen sind und keine komplizierten Konturen aufweisen. Ebenfalls sinken Stückkosten für den Abgaskühler, da die Werkzeuge für den Abgaskühler aufgrund hoher Stückzahlen besser ausgelastet werden können. Im Schritt des Verbindens können der Abgaskühlers und der Wassersammeladapter direkt oder über einen geeigneten Adapter miteinander verbunden werden.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine räumliche Darstellung eines Abgaskühlsystems gemäß einem Ausführungsbeispiel der vorliegenden Erfindung; und
- Fig. 2: eine räumliche Darstellung eines Abgaskühlsystems gemäß einem weiteren Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

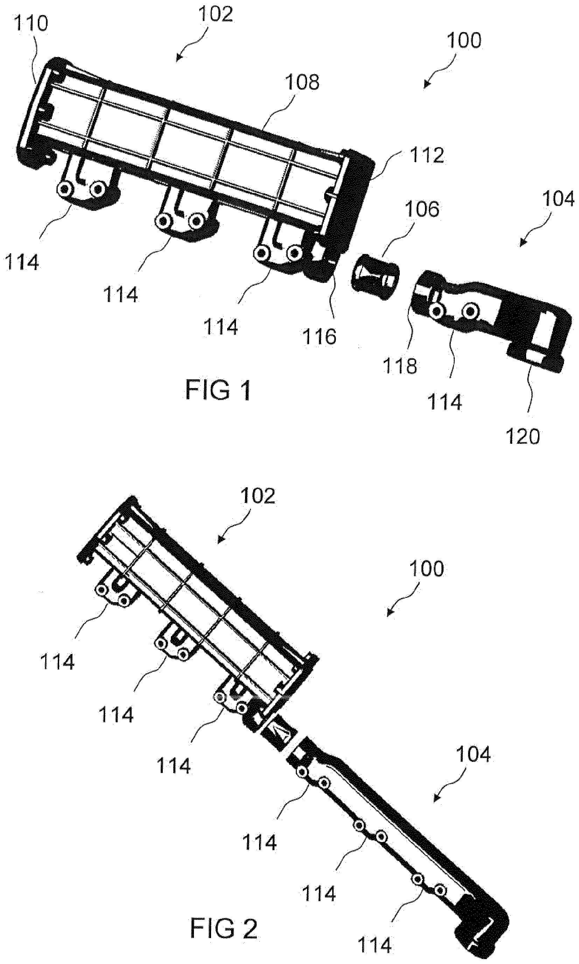

Fig. 1 zeigt eine räumliche Darstellung eines Abgaskühlsystems 100 gemäß einem Ausführungsbeispiel der vorliegenden Erfindung. Das Abgaskühlsystem 100 umfasst einen Abgaskühler 102 gemäß einem Ausführungsbeispiel der vorliegenden Erfindung. Weiterhin umfasst das Abgaskühlsystem 100 einen Wassersammeladapter 104 gemäß einem Ausführungsbeispiel der vorliegenden Erfindung. Der Abgaskühler 102 und der Wassersammeladapter 104 werden in einem, in den Figuren nicht gezeigten eingebauten Zustand durch ein Dichtelement 106 fluiddicht verbunden. Das hier dargestellte Abgaskühlsystem 100 ist zum Kühlen von Verbrennungsabgas einer Verbrennungskraftmaschine mit vier Zylindern geeignet.

Der Abgaskühler 102 weist ein Gehäuse 108 auf. Das Gehäuse 108 weist eine kastenartige Form mit Verstärkungsrippen auf. An einer ersten Stirnseite des Gehäuses 108 ist ein Abgaseintritt 110 angeordnet. An einer der ersten Stirnseite gegenüber liegenden zweiten Stirnseite des Gehäuses 108 ist ein Abgasaustritt 112 angeordnet. Der Abgaseintritt 110 ist über ein Rohrbündel aus Wärmetauscherrohren fluidisch mit dem Abgasaustritt 112 verbunden. Am Abgaseintritt 110 und am Abgasaustritt 112 weist das Gehäuse 108 je einen Flansch mit mehreren Befestigungsbohrungen auf. Der Abgaskühler 102 weist drei Kühlmitteleintritte 114 auf. Die Kühlmitteleintritte 114 sind in regelmäßigen Abständen und in einer Linie an einer die Stirnseiten verbindenden Schmalseite des Gehäuses 108 angeordnet. Die Kühlmitteleintritte 114 ragen aus dem Gehäuse hervor und sind dazu ausgebildet, den Abgaskühler 102 fluidisch mit drei von vier Kühlmittelauslässen der Verbrennungskraftmaschine zu verbinden. Die Kühlmitteleintritte 114 weisen eine gekröpfte Form auf. Die Kühlmitteleintritte 114 weisen als eine Befestigungseinrichtung zum Befestigen des Abgaskühlers 102 an der Verbrennungskraftmaschine je zwei Befestigungsbohrungen und eine Dichtfläche auf. Im Bereich der zweiten Stirnseite weist der Abgaskühler 102 eine Schnittstelle 116 zum fluidischen Anbinden eines Wassersammeladapters auf. Die Schnittstelle 116 ist fluidisch mit den Kühlmitteleintritten 114 verbunden. Die Schnittstelle 116 ragt auf der gleichen Schmalseite aus dem Gehäuse 108, wie die Kühlmitteleintritte 114. Die Schnittstelle 116 weist einen runden Querschnitt auf.

Der Wassersammeladapter 104 weist eine Schnittstelle 118 zum fluidischen Verbinden des Wassersammeladapters 104 mit der Schnittstelle 116 des Abgaskühlers 102 auf. Die Schnittstelle 118 weist einen runden Querschnitt auf. Der Wassersammeladapter 104 weist einen weiteren Kühlmitteleintritt 114 auf. Der Kühlmitteleintritt 114 am Wassersammeladapter 104 ist dazu ausgebildet, den Wassersammeladapter 104 fluidisch mit dem vierten Kühlmittelauslass der Verbrennungskraftmaschine zu verbinden. Der Kühlmitteleintritt 114 weist ebenfalls zwei Befestigungsbohrungen und eine Dichtfläche als Befestigungseinrichtung zum Befestigen des Wassersammeladapters 104 an der Verbrennungskraftmaschine auf. Weiterhin weist der Wassersammeladapter 104 einen Kühlmittelaustritt 120 auf. Der Kühlmittelaustritt 120 ist fluidisch mit der Schnittstelle 118 und dem Kühlmitteleintritt 114 verbunden. Der Kühlmittelaustritt 120 weist einen runden Querschnitt auf und ist quer zu einer Haupterstreckungsrichtung des Wassersammeladapters 104 ausgerichtet. Der Wassersammeladapter 104 weist keine Abgasführung auf. Der Wassersammeladapter 104 weist als Anschlüsse nur die Schnittstelle 118, den Kühlmittelaustritt 120 und eine Anzahl von Kühlmitteleintritten 114 auf. Dabei entspricht die Anzahl von Kühlmitteleintritten 114 des Wassersammeladapters 104 einer Gesamtanzahl von Kühlmittelauslässen eines Motorblocks, die durch das Abgaskühlsystems 100 zu bedienen sind, abzüglich der Anzahl von Kühlmitteleintritten 114 am Abgaskühler 102.

Fig. 2 zeigt eine räumliche Darstellung eines Abgaskühlsystems 100 gemäß einem weiteren Ausführungsbeispiel der vorliegenden Erfindung. Das hier dargestellte Abgaskühlsystem 100 ist zum Kühlen von Verbrennungsabgas einer Verbrennungskraftmaschine mit sechs Zylindern geeignet. Das Abgaskühlsystem 100 umfasst einen Abgaskühler 102, wie er in Fig. 1 beschrieben ist. Weiterhin umfasst das Abgaskühlsystem 100 einen Wassersammeladapter 104, wie er in Fig. 1 beschrieben ist. Zusätzlich zu den in Fig. 1 ausgeführten Merkmalen weist der Wassersammeladapter 104 zwei zusätzliche Kühlmitteleintritte 114 auf. Die Kühlmitteleintritte 114 sind in regelmäßigen Abständen entlang der Haupterstreckungsrichtung des Wassersammeladapters 104 angeordnet. Die Kühlmitteleintritte 114 am Wassersammeladapter 104 sind dazu ausgebildet, den Wassersammeladapter 104 fluidisch mit dem vierten, einem fünften und einem sechsten Kühlmittelauslass der Verbrennungskraftmaschine zu verbinden. Die Kühlmitteleintritte 114 weisen ebenfalls je zwei Befestigungsbohrungen und je eine Dichtfläche als Befestigungseinrichtung zum Befestigen des Wassersammeladapters 104 an der Verbrennungskraftmaschine auf.

Mit anderen Worten zeigen die Figuren 1 und 2 einen Abgaskühler 102 mit modularer Wassersammlung 104. Gezeigt ist ein mehrteiliger Aufbau der Funktionsgruppen "Abgaskühlung" und "Wassersammlung". Die Bauform des Abgaskühlers 102 ist durch den Anbau des Adapters zur Wasserzusammenführung 104 unabhängig von einer Zylinderanzahl. Bei diesem Design wird die Wassersammlung und Abführung des Kühlmittels, welches den Motor durchströmt, und die Kühlung des Abgases mit diesem Wasser bei unterschiedlichen Zylinderanzahlen realisiert. Bisher muss für jede Zylinderanzahl ein neues Gehäuse 108 angefertigt werden, was zu einer kostenintensiven Variantenpflege führt. Dadurch ergibt sich ein höherer Materialeinsatz und somit auch ein höheres Gewicht des Gesamtbauteils. Im Abgaskühlsystem 100 ist die Funktion Abgas kühlen und Wasser sammeln für eine variable Zylinderanzahl kombiniert. Ein Einbezug oder Entfall von einzelnen Zylindern von Motorenmodell zu Motorenmodell wird bei der Wassersammlung 104 berücksichtigt. Der Abgaskühlmittelkühler 102 und die Wassersammlung 104 können durch ein Dichtelement 106, beispielsweise eine Flachdichtung, eine O-ring-Verbindung oder ein Plug&Seal Element fluiddicht verbunden werden. Im Abgaskühler 102 wird ein Teilstrom der ersten Zylinder gesammelt und an einer Übergabestelle 116 zum Wassersammeladapter 104 (WSA) bereitgestellt. Der Wassersammeladapter 104 wird entsprechend der restlichen Zylinderzahl ausgewählt und mit dem Abgaskühler 102 verbunden. Alternativ kann der Wassersammeladapter 104 an den Abgaskühler 102 angeschweißt werden. Durch eine Reduzierung der Bauteilgröße ergibt sich eine Gewichtsersparnis. Eine variable Größe der Wassersammelleiste 104 kann entsprechend der Zylinderzahl ausgewählt werden.

Die beschriebenen Ausführungsbeispiele sind nur beispielhaft gewählt und können miteinander kombiniert werden.

## Patentansprüche

1. Abgaskühler (102) zum Kühlen von Verbrennungsabgas einer Verbrennungskraftmaschine mit einem Kühlmittel, wobei der Abgaskühler (102) die folgenden Merkmale aufweist:
einen Abgaseintritt (110) zum Einleiten von heißem Verbrennungsabgas in den Abgaskühler (102);
einen Abgasaustritt (112) zum Ausleiten von gekühltem Verbrennungsabgas aus dem Abgaskühler (102), wobei der Abgasaustritt (112) fluidisch mit dem Abgaseintritt (110) verbunden ist;
zumindest einen Kühlmitteleintritt (114) zum fluidischen Verbinden des Abgaskühlers (102) mit zumindest einem Kühlmittelauslass der Verbrennungskraftmaschine; und
eine Schnittstelle (116) zum fluidischen Anbinden eines Wassersammeladapters (104), wobei die Schnittstelle (116) dazu ausgebildet ist, das Kühlmittel aus dem Abgaskühler (102) abzuführen,
mit einem Wassersammeladapter, wobei der Wassersammeladapter (104) die folgenden Merkmale aufweist:
eine Schnittstelle (118) zum fluidischen Verbinden des Wassersammeladapters (104) mit der Schnittstelle des Abgaskühlers (102);
zumindest einen weiteren Kühlmitteleintritt (114) zum fluidischen Verbinden mit zumindest einem weiteren Kühlmittelauslass der Verbrennungskraftmaschine; und einen Kühlmittelaustritt (120), **dadurch gekennzeichnet, dass** der Kühlmittelaustritt (120) fluidisch mit der Schnittstelle (118) und dem weiteren Kühlmitteleintritt (114) verbunden ist.

2. Abgaskühler (102) gemäß Anspruch 1, bei dem der zumindest eine Kühlmitteleintritt (114) quer zu einer Strömungsrichtung des Verbrennungsabgases im Abgaskühler (102) aus dem Abgaskühler (102) herausragt und eine Befestigungseinrichtung zum Befestigen des Abgaskühlers (102) an der Verbrennungskraftmaschine aufweist.

3. Abgaskühler (102) gemäß einem der vorangegangenen Ansprüche, bei dem der zumindest eine Kühlmitteleintritt (114) abgewinkelt ist.

4. Abgaskühler (102) gemäß einem der vorangegangenen Ansprüche, bei dem die Schnittstelle (116) zum Anbinden des Wassersammeladapters (104) auf der Seite des Abgaskühlers (102) aus dem Abgaskühler (102) herausragt, auf welcher der zumindest eine Kühlmitteleintritt (114) angeordnet ist, wobei die Schnittstelle (116) dazu ausgebildet ist, das Kühlmittel in einer Strömungsrichtung des Verbrennungsabgases aus dem Abgaskühler (102) abzuführen.

5. Abgaskühler (102) gemäß einem der vorangegangenen Ansprüche, mit einem zweiten Kühlmitteleintritt (114) zum fluidischen Verbinden des Abgaskühlers (102) mit einem zweiten Kühlmittelauslass der Verbrennungskraftmaschine und mit einem dritten Kühlmitteleintritt (114) zum fluidischen Verbinden des Abgaskühlers (102) mit einem dritten Kühlmittelauslass der Verbrennungskraftmaschine.

6. Abgaskühler nach einem der vorhergehenden Ansprüche, **dadurch gekennzeichnet, dass** der zumindest eine Kühlmittelaustritt (120) eine Befestigungseinrichtung zum Befestigen des Wassersammeladapters (104) an der Verbrennungskraftmaschine aufweist.

7. Abgaskühlsystem (100) für eine mehrzylindrige Verbrennungskraftmaschine, wobei das Abgaskühlsystem (100) die folgenden Merkmale aufweist:
einen Abgaskühler (102) zum Kühlen von Verbrennungsabgas der Verbrennungskraftmaschine gemäß einem der Ansprüche 1 bis 6,
wobei die Schnittstelle (118) des Wassersammeladapters (104) fluidisch mit der Schnittstelle (116) des Abgaskühlers (102) verbunden ist.

8. Abgaskühlsystem (100) gemäß Anspruch 7, mit einem Dichtelement (106) zum fluiddichten Verbinden der Schnittstelle (116) des Abgaskühlers (102) mit der Schnittstelle (118) des Wassersammeladapters (104), wobei das Dichtelement (106) zwischen der Schnittstelle (116) des Abgaskühlers (102) und der Schnittstelle (118) des Wassersammeladapters (104) angeordnet ist, wobei das Dichtelement (106) dazu ausgebildet ist, radiale und axiale Bewegungen des Abgaskühlers (102) relativ zum Wassersammeladapter (104) auszugleichen.

9. Verfahren zum Herstellen eines Abgaskühlsystems (100) für eine mehrzylindrige Verbrennungskraftmaschine, mit folgenden Schritten:
Bereitstellen eines Abgaskühlers (102) gemäß einem der Ansprüche 1 bis 6;
Auswählen eines Wassersammeladapters (104), wobei eine Anzahl der Kühlmitteleintritte (114) an dem Wassersammeladapter (104) gleich einer Differenz zwischen einer Anzahl von Kühlmittelauslässen an der Verbrennungskraftmaschine und einer Anzahl von Kühlmitteleintritten (114) am Abgaskühler (102) ist; und
Verbinden des Abgaskühlers (102) mit dem Wassersammeladapter (104).

## Claims

1. An exhaust gas cooler (102) for cooling combustion exhaust gas of an internal combustion engine with a coolant, wherein the exhaust gas cooler (102) has the following features:
an exhaust gas inlet (110) for introducing hot combustion exhaust gas into the exhaust gas cooler (102);
an exhaust gas outlet (112) for directing cooled combustion exhaust gas out of the exhaust gas cooler (102), wherein the exhaust gas outlet (112) is fluidically connected to the exhaust gas inlet (110);
at least one coolant inlet (114) for fluidically connecting the exhaust gas cooler (102) to at least one coolant outlet of the internal combustion engine; and
an interface (116) for fluidically linking a water collecting adapter (104), wherein the interface (116) is designed to carry the coolant out of the exhaust gas cooler (102),
with a water collecting adapter, wherein the water collecting adapter (104) has the following features:
an interface (118) for fluidically connecting the water collecting adapter (104) to the interface of the exhaust gas cooler (102);
at least one further coolant inlet (114) for fluidically connecting to at least one further coolant outlet of the internal combustion engine; and
a coolant outlet (120), **characterised in that** the coolant outlet (120) is fluidically connected to the interface (118) and to the further coolant inlet (114) .

2. The exhaust gas cooler (102) according to claim 1, wherein the at least one coolant inlet (114) projects from the exhaust gas cooler (102) transverse to a flow direction of the combustion exhaust gas in the exhaust gas cooler (102) and has an attachment means for attaching the exhaust gas cooler (102) to the internal combustion engine.

3. The exhaust gas cooler (102) according to one of the preceding claims, wherein the at least one coolant inlet (114) is angled.

4. The exhaust gas cooler (102) according to one of the preceding claims, wherein the interface (116) for linking the water collecting adapter (104) projects from the exhaust gas cooler (102) on the side of the exhaust gas cooler (102), said side on which the at least one coolant inlet (114) is arranged, wherein the interface (116) is designed to carry the coolant out of the exhaust gas cooler (102) in a flow direction of the combustion exhaust gas.

5. The exhaust gas cooler (102) according to one of the preceding claims, with a second coolant inlet (114) for fluidically connecting the exhaust gas cooler (102) to a second coolant outlet of the internal combustion engine and with a third coolant inlet (114) for fluidically connecting the exhaust gas cooler (102) to a third coolant outlet of the internal combustion engine.

6. The exhaust gas cooler according to one of the preceding claims, **characterised in that** the at least one coolant outlet (120) has an attachment means for attaching the water collecting adapter (104) to the internal combustion engine.

7. An exhaust gas cooling system (100) for a multi-cylinder internal combustion engine, wherein the exhaust gas cooling system (100) has the following features:
an exhaust gas cooler (102) for cooling combustion exhaust gas of the internal combustion engine according to one of claims 1 to 6,
wherein the interface (118) of the water collecting adapter (104) is fluidically connected to the interface (116) of the exhaust gas cooler (102).

8. The exhaust gas cooling system (100) according to claim 7, with a sealing element (106) for the fluid-tight connection of the interface (116) of the exhaust gas cooler (102) to the interface (118) of the water collecting adapter (104), wherein the sealing element (106) is arranged between the interface (116) of the exhaust gas cooler (102) and the interface (118) of the water collecting adapter (104), wherein the sealing element (106) is designed to compensate radial and axial movements of the exhaust gas cooler (102) relative to the water collecting adapter (104).

9. A method for manufacturing an exhaust gas cooling system (100) for a multi-cylinder internal combustion engine, with the following steps:
providing an exhaust gas cooler (102) according to one of claims 1 to 6;
selecting a water collecting adapter (104), wherein a number of the coolant inlets (114) on the water collecting adapter (104) is equal to a difference between a number of coolant outlets on the internal combustion engine and a number of coolant inlets (114) on the exhaust gas cooler (102); and
connecting the exhaust gas cooler (102) to the water collecting adapter (104).

## Revendications

1. Refroidisseur de gaz d'échappement (102) servant au refroidissement, avec un liquide de refroidissement, de gaz de combustion d'un moteur à combustion interne, où le refroidisseur de gaz d'échappement (102) présente les caractéristiques suivantes, en ayant :
une entrée de gaz d'échappement (110) servant à l'introduction de gaz de combustion chauds dans le refroidisseur de gaz d'échappement (102) ;
une sortie de gaz d'échappement (112) servant à l'évacuation, depuis le refroidisseur de gaz d'échappement (102), de gaz de combustion refroidis, où la sortie de gaz d'échappement (112) est reliée fluidiquement à l'entrée de gaz d'échappement (110) ;
au moins une entrée de liquide de refroidissement (114) servant à la communication fluidique du refroidisseur de gaz d'échappement (102) avec au moins une sortie de liquide de refroidissement du moteur à combustion interne ; et
un point de jonction (116) permettant la liaison fluidique avec un adaptateur collecteur d'eau (104), où le point de jonction (116) est conçu de manière telle, que le liquide de refroidissement soit évacué du refroidisseur de gaz d'échappement (102), avec un adaptateur collecteur d'eau, où l'adaptateur collecteur d'eau (104) présente les caractéristiques suivantes, en ayant :
un point de jonction (118) permettant la communication fluidique de l'adaptateur collecteur d'eau (104) avec le point de jonction du refroidisseur de gaz d'échappement (102) ;
au moins une autre entrée de liquide de refroidissement (114) servant à la communication fluidique avec au moins une autre sortie de liquide de refroidissement du moteur à combustion interne ;
et une sortie de liquide de refroidissement (120), **caractérisé en ce que** la sortie de liquide de refroidissement (120) est reliée fluidiquement au point de jonction (118) et à l'autre entrée de liquide de refroidissement (114).

2. Refroidisseur de gaz d'échappement (102) selon la revendication 1, dans lequel l'entrée de liquide de refroidissement (114) au moins au nombre de un, disposée transversalement par rapport à une direction d'écoulement des gaz de combustion dans le refroidisseur de gaz d'échappement (102), est en saillie par rapport au refroidisseur de gaz d'échappement (102), et présente un dispositif de fixation servant à la fixation du refroidisseur de gaz d'échappement (102) sur le moteur à combustion interne.

3. Refroidisseur de gaz d'échappement (102) selon l'une des revendications précédentes, dans lequel l'entrée de liquide de refroidissement (114) au moins au nombre de un est coudée.

4. Refroidisseur de gaz d'échappement (102) selon l'une quelconque des revendications précédentes, dans lequel le point de jonction (116), qui permet, sur le côté du refroidisseur de gaz d'échappement (102), la liaison avec l'adaptateur collecteur d'eau (104), est en saillie par rapport au refroidisseur de gaz d'échappement (102), côté sur lequel est disposée l'entrée de liquide de refroidissement (114) au moins au nombre de un, où le point de jonction (116) est conçu de manière telle, que le liquide de refroidissement soit évacué du refroidisseur de gaz d'échappement (102) suivant une direction d'écoulement des gaz de combustion.

5. Refroidisseur de gaz d'échappement (102) selon l'une quelconque des revendications précédentes, comprenant une deuxième entrée de liquide de refroidissement (114) servant à la communication fluidique du refroidisseur de gaz d'échappement (102) avec une deuxième sortie de liquide de refroidissement du moteur à combustion interne, et comprenant une troisième entrée de liquide de refroidissement (114) servant à la communication fluidique du refroidisseur de gaz d'échappement (102) avec une troisième sortie de liquide de refroidissement du moteur à combustion interne.

6. Refroidisseur de gaz d'échappement selon l'une quelconque des revendications précédentes, **caractérisé en ce que** la sortie de liquide de refroidissement (120) au moins au nombre de un présente un dispositif de fixation servant à la fixation de l'adaptateur collecteur d'eau (104) sur le moteur à combustion interne.

7. Système de refroidissement de gaz d'échappement (100) pour un moteur à combustion interne à plusieurs cylindres, où le système de refroidissement de gaz d'échappement (100) présente les caractéristiques suivantes :
un refroidisseur de gaz d'échappement (102) servant au refroidissement de gaz de combustion du moteur à combustion interne selon l'une quelconque des revendications 1 à 6,
où le point de jonction (118) de l'adaptateur collecteur d'eau (104) est relié fluidiquement au point de jonction (116) du refroidisseur de gaz d'échappement (102).

8. Système de refroidissement de gaz d'échappement (100) selon la revendication 7, comprenant un élément d'étanchéité (106) servant à la communication fluidique du point de jonction (116) du refroidisseur de gaz d'échappement (102) avec le point de jonction (118) de l'adaptateur collecteur d'eau (104), où l'élément d'étanchéité (106) est disposé entre le point de jonction (116) du refroidisseur de gaz d'échappement (102) et le point de jonction (118) de l'adaptateur collecteur d'eau (104), où l'élément d'étanchéité (106) est conçu pour compenser des mouvements radiaux et axiaux du refroidisseur de gaz d'échappement (102), par rapport à l'adaptateur collecteur d'eau (104).

9. Procédé de fabrication d'un système de refroidissement de gaz d'échappement (100) pour un moteur à combustion interne à plusieurs cylindres, ledit procédé comprenant les différentes étapes consistant :
à fournir un refroidisseur de gaz d'échappement (102) selon l'une quelconque des revendications 1 à 6 ;
à sélectionner un adaptateur collecteur d'eau (104), où un nombre des entrées de liquide de refroidissement (114) placées sur l'adaptateur collecteur d'eau (104) est égal à une différence entre un nombre de sorties de liquide de refroidissement placées sur le moteur à combustion interne, et un nombre d'entrées de liquide de refroidissement (114) placées sur le refroidisseur de gaz d'échappement (102) ; et
à assembler le refroidisseur de gaz d'échappement (102) avec l'adaptateur collecteur d'eau (104).
